# EUROPÄISCHE PATENTSCHRIFT

(11) **EP 3 867 967 B1**
(45) Veröffentlichungstag und Bekanntmachung des Hinweises auf die Patenterteilung: **24.08.2022**
(21) Anmeldenummer: 19774132.5
(22) Anmeldetag: 02.10.2019
(51) Int. Cl.: H01M 6/52, H01M 10/54, B03B 9/06

(54) **ANLAGE ZUM RECYCELN GEBRAUCHTER BATTERIEN**
INSTALLATION FOR RECYCLING USED BATTERIES
INSTALLATION DE RECYCLAGE DE BATTERIES USÉES

(30) Priorität: 18.10.2018 EP 18201348
(43) Veröffentlichungstag der Anmeldung: 25.08.2021
(73) Patentinhaber: BHS-Sonthofen GmbH, 87527 Sonthofen (DE)
(72) Erfinder: WEBER, Daniel, 87509 Immenstadt (DE); DRECHSEL, Christopher, 87527 Sonthofen (DE)
(74) Vertreter: Herzog, Markus
(86) Internationale Anmeldenummer: PCT/EP2019/076689
(87) Internationale Veröffentlichungsnummer: WO 2020/078722

(56) Entgegenhaltungen:
- WO-A1-2005/015668
- DE-A1-102011 110 083
- DE-A1-102015 207 843

## Beschreibung

Die Erfindung betrifft eine Anlage zum Recyceln gebrauchter Batterien.

Im Zusammenhang mit der vorliegenden Erfindung werden unter dem Begriff "Batterie" nicht nur Batterien im eigentlichen Sinn verstanden, d.h. nicht wiederaufladbare Primärzellen, sondern auch Akkumulatoren, d.h. wiederaufladbare Energiespeicherzellen. Insbesondere ist die erfindungsgemäße Vorrichtung für die Aufbereitung von wiederaufladbaren und nicht wiederaufladbaren Speicherzellen geeignet, welche unter Verwendung von Lithium, d.h. insbesondere von Lithium-Verbindungen und/oder Lithium-Ionen, aufgebaut sind, und in der vorliegenden Anmeldung ganz allgemein als "Lithiumbatterien" bezeichnet werden.

Ferner wird im Zusammenhang mit der vorliegenden Erfindung unter dem Begriff "Trocknung" ganz allgemein das Entfernen, insbesondere Verdampfen, des Elektrolyts verstanden, beispielsweise Dimethylcarbonat (DMC) und/oder Ethylmethylcarbonat (EMC). Obgleich es sich dabei nicht notwendigerweise nur um flüssige Stoffe zu handeln braucht, sondern es auch um Feststoffe gehen kann, hat sich hierfür in der Fachsprache der Begriff "Trocknung" eingebürgert.

Das Recyceln von Batterien, insbesondere das Recyceln von Lithiumbatterien, ist nicht ganz unproblematisch, da aufgrund der in den Batterien verwendeten elektrochemischen Materialien ein hohes Risiko der Selbstentzündung, ja teilweise sogar ein Explosionsrisiko besteht.

Bei der aus der gattungsgemäßen DE 10 2015 207 843 A1 bekannten Anlage werden die Batterien daher aufwendig vorbereitet, insbesondere entladen und demontiert, bevor sie zerkleinert und getrocknet werden. Dies erhöht, insbesondere aufgrund des erforderlichen Personalaufwands, die Betriebskosten der bekannten Vorrichtung.

In der WO 2005/015668 A1, welche den nächstliegenden Stand der Technik bildet, ist eine Anlage zum Recyceln gebrauchter Batterien offenbart. Ferner wird auf die Druckschrift DE 10 2011 110083 A1 hingewiesen.

Daher ist es Aufgabe der vorliegenden Erfindung, eine Anlage der eingangs genannten Art anzugeben, welche wirtschaftlicher betrieben werden kann. Diese Aufgabe wird durch eine Anlage nach Anspruch 1 gelöst.

Die Zwischenspeichervorrichtung übernimmt in der erfindungsgemäßen Anlage eine mehrfache Funktion.

Zunächst gibt die Zwischenspeicherung den in dem zerkleinerten Gut ablaufenden elektrochemischen Reaktionen Zeit so weit abzuklingen, dass sie kein Problem mehr darstellen, wenn das zerkleinerte Gut der Trocknungsvorrichtung zugeführt wird.

Darüber hinaus dient die Zwischenspeichervorrichtung als Pufferspeicher für zerkleinertes Gut. Auf diese Weise kann die erfindungsgemäße Anlage Batch-weise betrieben werden, so dass der Zerkleinerungsvorrichtung in jedem Batch immer nur eine so geringe Menge gebrauchter Batterien zugeführt zu werden braucht, während der Trocknungsvorrichtung eine größere Menge an zerkleinertem Gut auf einmal zugeführt werden kann. Aufgrund der geringen Menge an in einem Schritt zu zerkleinerndem Gut kann die Gefahr einer Selbstentzündung praktisch ausgeschlossen werden. Dies ist vor allem deshalb von Vorteil, weil die gebrauchten Batterien in der erfindungsgemäßen Anlage der Zerkleinerungsvorrichtung in einem nicht vorentladenen oder zumindest nicht vollständig vorentladenen Zustand zugeführt werden, und der die elektrochemischen Reaktionen treibende Restladungszustand der Batterien unbekannt ist.

Und schließlich werden von der Zerkleinerungsvorrichtung frisch in den Zwischenspeicherraum eingebrachte zerkleinerte Batterien dort mittels des Rührwerks mit bereits früher in den Zwischenspeicherraum eingebrachtem zerkleinertem Gut durchmischt, bei dem die elektrochemischen Reaktionen zumindest teilweise schon abgeklungen sind. Hierdurch kann die Bildung von Teilvolumina unzulässig hoher Temperatur, von denen ein erhöhtes Selbstentzündungsrisiko ausgeht, vermieden werden.

Um das Risiko einer Selbstentzündung weiter reduzieren zu können, wird sowohl der Zerkleinerungsvorrichtung als auch der Zwischenspeichervorrichtung als auch der Trocknungsvorrichtung zudem Inertgas zugeführt, d.h. ein Gas, das der Selbstentzündung der zerkleinerten Batterien während des Ablaufens der elektrochemischen Reaktionen zumindest entgegenwirkt, wenn diese nicht sogar verhindert. Beispielsweise kann Stickstoffgas und/oder Kohlendioxidgas als Inertgas verwendet werden.

Durch all diese Maßnahmen wird erreicht, dass in der erfindungsgemäßen Anlage im Wesentlichen unvorbereitete, insbesondere nicht oder zumindest nicht vollständig vorentladene und demontierte, Batterien in einem im Wesentlichen automatisiert und daher kostengünstig ablaufenden Prozess recycelt werden können.

Erfindungsgemäß können in der erfindungsgemäßen Anlage pro Stunde beispielsweise 1t gebrauchter Batterien recycelt werden, die der Zerkleinerungsvorrichtung in Form von zehn Batches à 100kg zugeführt und in der Zwischenspeichervorrichtung zwischengespeichert, bevor sie an die Trocknungsvorrichtung weitergeleitet werden. Hierzu kann die Zerkleinerungsvorrichtung einen Zerkleinerungsraum von beispielsweise etwa 0,5m³ Volumen aufweisen und/oder kann die Zwischenspeichervorrichtung einen Zwischenspeicherraum von beispielsweise etwa 6,0m³ Volumen aufweisen und/oder kann die Trocknungsvorrichtung einen Trocknungsraum von beispielsweise etwa 3,0m³ Volumen aufweisen. Bei der letztgenannten Angabe ist zu berücksichtigen, dass das zerkleinerte Gut durch die Fördereinrichtung, beispielsweise einer Rohrförderschnecke, die es von der Homogenisierungsvorrichtung zur Trocknungsvorrichtung transportiert, verdichtet wird.

Um den Austritt umweltunverträglicher oder gar gefährlicher Gase aus der Batterie-Recyclinganlage verhindern zu können, wird in Weiterbildung der Erfindung vorgeschlagen, dass der Zerkleinerungsraum oder/und der Zwischenspeicherraum oder/und der Trocknungsraum gasdicht ausgebildet sind.

Vorteilhafterweise kann ferner vorgesehen sein, dass die Übergabevorrichtung zur Übergabe der zerkleinerten Batterien von der Zerkleinerungsvorrichtung zur Zwischenspeichervorrichtung und/oder die Übergabevorrichtung zur Übergabe der zerkleinerten Batterien von der Zwischenspeichervorrichtung zur Trocknungsvorrichtung gasdicht ausgebildet und mit den an sie angrenzenden Vorrichtungen gasdicht verbunden ist.

Zudem kann vorgesehen sein, dass eine Abgasbehandlungsvorrichtung vorgesehen ist, welche mit dem Zerkleinerungsraum oder/und dem Zwischenspeicherraum oder/und dem Trocknungsraum über Gaszufuhrleitungen verbunden ist und dazu ausgebildet und bestimmt ist, die im Zerkleinerungsraum oder/und im Zwischenspeicherraum oder/und im Trocknungsraum gebildeten Gase aufzubereiten. Welche Komponenten die Abgasbehandlungsvorrichtung in Abhängigkeit der jeweils anfallenden Gaskomponenten umfassen kann bzw. sollte, ist dem Fachmann bekannt. Daher soll an dieser Stelle auf eine eingehende Diskussion des Aufbaus und der Funktion der Abgasbehandlungsvorrichtung verzichtet werden.

Um das von der Recyclinganlage ausgehende Risiko weiter mindern zu können, wird vorgeschlagen, dass der Zerkleinerungsvorrichtung eine Tiefkühlvorrichtung vorgeordnet ist, welche eine Zuführleitung für flüssiges Tiefkühlmedium umfasst und welche dazu ausgebildet und bestimmt ist, die gebrauchten Batterien in dem flüssigen Tiefkühlmedium tiefzukühlen, bevor sie in der Zerkleinerungsvorrichtung zerkleinert werden.

Als flüssiges Tiefkühlmedium kann beispielsweise verflüssigtes Inertgas verwendet werden, insbesondere flüssiger Stickstoff und/oder flüssiges Kohlendioxid. In diesem Fall kann ferner vorgesehen sein, dass ein Gaskopfraum der Tiefkühlvorrichtung mit der Zuleitung für Inertgas verbunden ist. Auf diese Weise kann das aufgrund des Energieeintrags durch die gebrauchten Batterien verdampfende Tiefkühlmedium in der Zerkleinerungsvorrichtung und/oder in der Zwischenspeichervorrichtung und/oder in der Trocknungsvorrichtung als Inertgas verwendet werden.

Um verhindern zu können, dass zu große Fragmente der zerkleinerten Batterien die Zerkleinerungsvorrichtung in Richtung Zwischenspeichervorrichtung verlassen können, wird vorgeschlagen, dass am Ausgang der Zerkleinerungsvorrichtung eine Siebeinheit, beispielsweise ein Lochsieb, angeordnet ist. Die Siebeinheit kann beispielsweise Öffnungen mit einem Durchmesser von 20mm aufweisen. Als Zerkleinerungsvorrichtung kann beispielsweise ein Universal-Shredder des Typs NGU 0513 verwendet werden, wie er von der Anmelderin vertrieben wird.

Um sicherstellen zu können, dass die Temperatur in dem Zwischenspeicherraum einen kritischen Temperaturwert, beispielsweise 120°C, nicht überschreitet, kann ferner vorgesehen sein, dass der Zwischenspeichervorrichtung eine Kühlvorrichtung zugeordnet ist. Diese Kühlvorrichtung kann beispielsweise in Form von Kühlrohren ausgebildet sein, welche an einer den Zwischenspeicherraum umschließenden Wandung angebracht sind, mit dieser in Wärmeaustauschkontakt stehen und im Bedarfsfall von Kühlmedium durchströmt werden können.

In Weiterbildung der Erfindung wird vorgeschlagen, dass die Trocknungsvorrichtung als Unterdrucktrocknungsvorrichtung ausgebildet ist und eine Drucksteuereinheit aufweist, welche dazu ausgelegt und bestimmt ist, den Druck im Trocknungsraum auf einen Wert von etwa 50hPa unterhalb des Umgebungsdrucks einzustellen und zu halten. Um gleichwohl effektiv trocknen zu können, wird ferner vorgeschlagen, dass die Trocknungsvorrichtung ferner eine Temperatursteuereinheit aufweist, welche dazu ausgelegt und bestimmt ist, die Temperatur im Trocknungsraum auf einen Wert von zwischen etwa 100°C und etwa 120°C einzustellen und zu halten.

Um die zerkleinerten und getrockneten Batterien der weiteren Aufbereitung zuführen zu können, kann vorgesehen sein, dass der Zerkleinerungsvorrichtung eine Abfüllvorrichtung nachgeordnet ist. In dieser Abfüllvorrichtung können die zerkleinerten und getrockneten Batterien beispielsweise in Transportbehälter abgefüllt werden.

Es ist jedoch auch denkbar, dass der Zerkleinerungsvorrichtung eine, vorzugsweise der Abfüllvorrichtung vorgeordnete, Sichtungsvorrichtung nachgeordnet ist. In dieser Sichtungsvorrichtung können die einzelnen Bestandteile der zerkleinerten und getrockneten Batterien voneinander getrennt und so einer gezielteren Aufbereitung zugeführt werden.

Die Erfindung wird im Folgenden an einem Ausführungsbeispiel anhand der beigefügten Zeichnung näher erläutert werden. Es stellt dar:

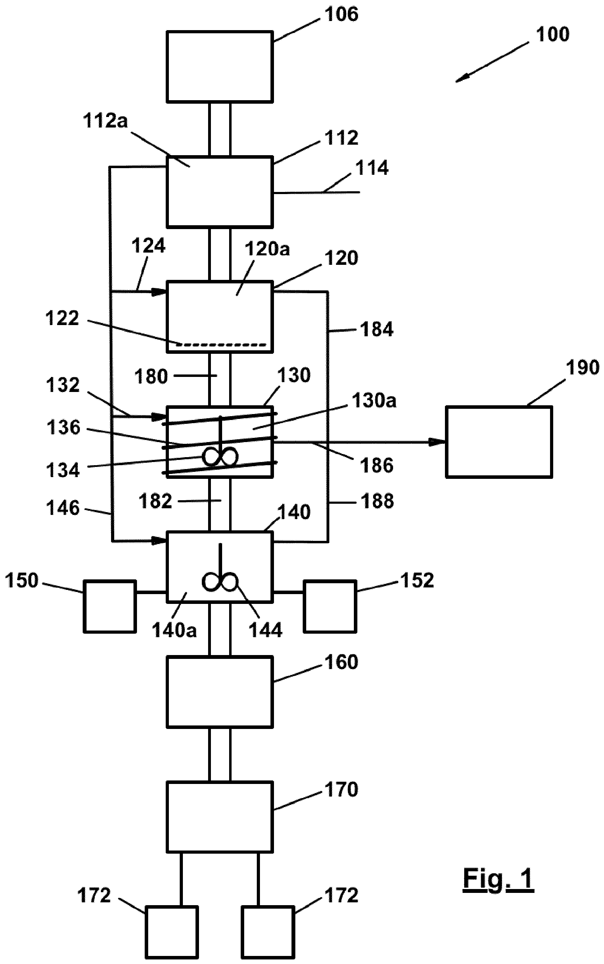

- Figur 1: eine grob schematische Prinzipskizze des Aufbaus der erfindungsgemäßen Anlage zum Recyceln von Batterien.

In Figur 1 ist eine erfindungsgemäße Anlage zum Recyceln gebrauchter Batterien ganz allgemein mit 100 bezeichnet. Die Anlage 100 umfasst eine Zerkleinerungsvorrichtung 120, eine Zwischenspeichervorrichtung 130 und eine Trocknungsvorrichtung 140.

Die Anlage 100 ist für einen Batch-weisen Betrieb ausgelegt. D.h. der Zerkleinerungsvorrichtung 120 wird jeweils eine vorbestimmte Menge gebrauchter Batterien, beispielsweise 100kg gebrauchter Lithiumbatterien, von einer vorgeschalteten Dosiervorrichtung 106 zugeführt, die zum Aufteilen der angelieferten gebrauchten Batterien in einzelne Portionen der vorbestimmten Menge dient.

Gewünschtenfalls kann zwischen der Dosiervorrichtung 106 und der Zerkleinerungsvorrichtung 120 auch noch eine in Figur 1 gestrichelt angedeutete Tiefkühlvorrichtung 112 vorgesehen sein, in welcher die zu zerkleinernden Batterien in verflüssigtem Inertgas, beispielsweise flüssigem Stickstoff und/oder flüssigem Kohlendioxid, tiefgefroren werden, bevor sie der Zerkleinerungsvorrichtung 120 zugeführt werden. Das verflüssigte Intergas kann der Tiefkühlvorrichtung über eine Zuführleitung 114 zugeführt werden.

Die Zerkleinerungsvorrichtung 120 kann beispielsweise von einem Universal-Shredder des Typs NGU 0513 gebildet sein, wie er von der Anmelderin vertrieben wird. Ausgangsseitig kann die Zerkleinerungsvorrichtung 120 mit einer Siebvorrichtung 122 ausgestattet sein, beispielsweise einem Lochblech, dessen Löcher einen Durchmesser von etwa 20mm aufweisen. Um zu verhindern, dass umweltunverträgliche Gase aus der Zerkleinerungsvorrichtung 120 austreten ist diese vorzugsweise gasdicht ausgebildet. Zudem die Zerkleinerungsvorrichtung 120 mit einer Zuleitung 124 für Inertgas ausgestattet sein, über die dem Zerkleinerungsraum 120a der Zerkleinerungsvorrichtung 120 Inertgas zugeführt werden kann, welches das Risiko einer Selbstentzündung der zerkleinerten Batterien reduziert, wenn nicht gar vollständig ausschließt. Ist eine Tiefkühlvorrichtung 112 der vorstehend beschriebenen Art vorgesehen, so kann das Inertgas aus deren Kopfraum 112a entnommen und der Zerkleinerungsvorrichtung 120 zugeführt werden.

Nach einer vorbestimmten Verweildauer in der Zerkleinerungsvorrichtung 120 werden die zerkleinerten Batterien zur Zwischenspeichervorrichtung 130 gefördert. Auch diese ist vorzugsweise gasdicht ausgeführt. Zudem kann auch der Zwischenspeichervorrichtung 130 über eine Zuführleitung 132 Inertgas zugeführt werden, um das Risiko einer Selbstentzündung der zerkleinerten Batterien reduzieren, wenn nicht gar vollständig ausschließen zu können. Die Zwischenspeichervorrichtung 130 verfügt ferner über ein Rührwerk 134, das die in dem Zwischenspeicherraum 130a aufgenommenen und zerkleinerten Batterien ständig durchmischt, um die Bildung von Teilvolumina überhöhter Temperatur zu verhindern. Für den Fall, dass die Temperatur in dem Zwischenspeicherraum 130a zu sehr ansteigen sollte, verfügt die Zwischenspeichervorrichtung 130 ferner über eine Kühlvorrichtung 136, beispielsweise von Kühlmedium durchströmte Kühlschlangen, die an der äußeren Begrenzungswand des Zwischenspeicherraums 130a angebracht sind und mit dieser in Wärmeaustauschkontakt stehen.

Wurden in der Zwischenspeichervorrichtung 130 die zerkleinerten Batterien aus einer vorbestimmten Anzahl von Zerkleinerungsvorgängen aufgenommen, so wird der Zwischenspeicherraum 130a in Richtung der Trocknungsvorrichtung 140 entleert, deren Trocknungsraum 140a vorzugsweise ebenfalls gasdicht ausgebildet ist und die ebenfalls über ein Rührwerk 144 verfügen kann. Ferner kann auch dem Trocknungsraum 140a über eine Leitung 146 Inertgas zugeführt werden. In dem dargestellten Ausführungsbeispiel ist die Trocknungsvorrichtung 140 als Unterdruck-Trocknungsvorrichtung ausgebildet, die die zerkleinerten Batterien bei einem Druck von 50hPa unter dem Umgebungsdruck und einer Temperatur von wenigstens 120°C trocknet. Die hierzu erforderliche Drucksteuereinheit und Temperatursteuereinheit sind in Figur 1 mit 150 bzw. 152 bezeichnet.

Der Trocknungsvorrichtung 140 kann noch eine Sichtungsvorrichtung 160 an sich bekannter und daher hier nicht näher erläuterter Bauart nachgeordnet sein, in der die einzelnen Bestandteile der zerkleinerten und getrockneten Batterien voneinander getrennt und so einer gezielteren Aufbereitung zugeführt werden können. Grundsätzlich ist es denkbar, eine Mehrzahl von Sichtungsstufen hintereinander anzuordnen, wobei eine der Sichtungsstufen ein einfaches Sieb aufweisen kann.

Schließlich können die zerkleinerten, getrockneten und gegebenenfalls nach Bestandteilen getrennten Batterien in einer Abfüllvorrichtung 170 in Transportbehälter 172 abgefüllt werden.

Nachzutragen ist noch, dass nicht nur die Zerkleinerungsvorrichtung 120, die Zwischenspeichervorrichtung 130 und die Trocknungsvorrichtung 140 gasdicht ausgeführt sein können, sondern auch die Übergabevorrichtungen 180 und 182, die die zerkleinerten Batterien von der Zerkleinerungsvorrichtung 120 zur Zwischenspeichervorrichtung 140 bzw. von der Zwischenspeichervorrichtung 130 zur Trocknungsvorrichtung 140 übergeben.

Nachzutragen ist ferner, dass die in der Zerkleinerungsvorrichtung 120, der Zwischenspeichervorrichtung 130 und der Trocknungsvorrichtung 140 gebildeten, potentiell umweltgefährdenden Gase über Leitungen 184, 186, 188 einer Abgasbehandlungsvorrichtung 190 an sich bekannter Art zugeführt werden können, in der sie in umweltverträglicher Art aufbereitet werden.

Nachzutragen ist schließlich auch noch, dass sämtliche vorstehend genannten Vorrichtungen der Batterie-Recyclinganlage 100 mit zugehörigen, jedoch in Figur 1 nicht dargestellten Einleitungs- und/oder Ausleitungsschleusen ausgebildet sein können.

## Patentansprüche

1. Anlage (100) zum Recyceln gebrauchter Batterien, umfassend
• eine Zerkleinerungsvorrichtung (120), welche dazu ausgelegt und bestimmt ist, die gebrauchten Batterien in einem Zerkleinerungsraum (120a) zu zerkleinern, und
• eine der Zerkleinerungsvorrichtung (120) nachgeordnete Trocknungsvorrichtung (140), welche dazu ausgelegt und bestimmt ist, die zerkleinerten Batterien zu trocknen,
wobei zwischen der Zerkleinerungsvorrichtung (120) und der Trocknungsvorrichtung (140) eine Zwischenspeichervorrichtung (130) angeordnet ist,
wobei das Volumen eines Zwischenspeicherraums (130a) der Zwischenspeichervorrichtung (130) wenigstens das Fünffache, vorzugsweise wenigstens das Zehnfache, des Volumens des Zerkleinerungsraums (120a) der Zerkleinerungsvorrichtung (120) beträgt, und
die Zwischenspeichervorrichtung (130) ferner ein Rührwerk (134) umfasst, das dazu ausgebildet und bestimmt ist, die in dem Zwischenspeicherraum (130a) aufgenommenen zerkleinerten Batterien in Bewegung zu halten, und
wobei sowohl der Zerkleinerungsraum (20a) der Zerkleinerungsvorrichtung (120) als auch der Zwischenspeicherraum (130a) der Zwischenspeichervorrichtung (130) als auch ein Trocknungsraum (140a) der Trocknungsvorrichtung (140) eine Zuleitung (124, 132, 146) für Inertgas aufweisen.

2. Anlage nach Anspruch 1,
**dadurch gekennzeichnet, dass** der Zerkleinerungsraum (120a) oder/und der Zwischenspeicherraum (130a) oder/und der Trocknungsraum (140a) gasdicht ausgebildet sind.

3. Anlage nach Anspruch 1 oder 2,
**dadurch gekennzeichnet, dass** die Übergabevorrichtung (180) zur Übergabe der zerkleinerten Batterien von der Zerkleinerungsvorrichtung (120) zur Zwischenspeichervorrichtung (130) und/oder die Übergabevorrichtung (182) zur Übergabe der zerkleinerten Batterien von der Zwischenspeichervorrichtung (130) zur Trocknungsvorrichtung (140) gasdicht ausgebildet und mit den an sie angrenzenden Vorrichtungen gasdicht verbunden ist.

4. Anlage nach einem der Ansprüche 1 bis 3,
**dadurch gekennzeichnet, dass** eine Abgasbehandlungsvorrichtung (190) vorgesehen ist, welche mit dem Zerkleinerungsraum (120a) oder/und dem Zwischenspeicherraum (130a) oder/und dem Trocknungsraum (140a) über Gaszufuhrleitungen (184, 186, 188) verbunden ist und dazu ausgebildet und bestimmt ist, die im Zerkleinerungsraum (120a) oder/und im Zwischenspeicherraum (103a) oder/und im Trocknungsraum (140a) gebildeten Gase aufzubereiten.

5. Anlage nach einem der Ansprüche 1 bis 4,
**dadurch gekennzeichnet, dass** der Zerkleinerungsvorrichtung (120) eine Tiefkühlvorrichtung (112) vorgeordnet ist, welche eine Zuführleitung (114) für flüssiges Tiefkühlmedium umfasst und welche dazu ausgebildet und bestimmt ist, die gebrauchten Batterien in dem flüssigen Tiefkühlmedium tiefzukühlen, bevor sie in der Zerkleinerungsvorrichtung (120) zerkleinert werden.

6. Anlage nach Anspruch 5,
**dadurch gekennzeichnet, dass** ein Gaskopfraum (112a) der Tiefkühlvorrichtung (112) mit der Zuleitung (124, 132, 146) für Inertgas verbunden ist.

7. Anlage nach einem der Ansprüche 1 bis 6,
**dadurch gekennzeichnet, dass** am Ausgang der Zerkleinerungsvorrichtung (120) eine Siebeinheit (122), beispielsweise ein Lochsieb, angeordnet ist.

8. Anlage nach einem der Ansprüche 1 bis 7,
**dadurch gekennzeichnet, dass** der Zwischenspeichervorrichtung (130) eine Kühlvorrichtung (136) zugeordnet ist.

9. Anlage nach einem der Ansprüche 1 bis 8,
**dadurch gekennzeichnet, dass** die Trocknungsvorrichtung (140) als Unterdrucktrocknungsvorrichtung (140) ausgebildet ist und eine Drucksteuereinheit (150) aufweist, welche dazu ausgelegt und bestimmt ist, den Druck im Trocknungsraum (140a) auf einen Wert von etwa 50hPa unterhalb des Umgebungsdrucks einzustellen und zu halten.

10. Anlage nach einem der Ansprüche 1 bis 9,
**dadurch gekennzeichnet, dass** die Trocknungsvorrichtung (140) eine Temperatursteuereinheit (152) aufweist, welche dazu ausgelegt und bestimmt ist, die Temperatur im Trocknungsraum (140a) auf einen Wert von mindestens 120°C einzustellen und zu halten.

11. Anlage nach einem der Ansprüche 1 bis 10,
**dadurch gekennzeichnet, dass** der Zerkleinerungsvorrichtung (120) eine Abfüllvorrichtung (170) nachgeordnet ist.

12. Anlage nach einem der Ansprüche 1 bis 11,
**dadurch gekennzeichnet, dass** der Zerkleinerungsvorrichtung (120) wenigstens eine, vorzugsweise der Abfüllvorrichtung (170) vorgeordnete, Sichtungsvorrichtung (160) nachgeordnet ist.

## Claims

1. Plant (100) for recycling used batteries, comprising
• a comminuting device (120) which is designed and intended to comminute the used batteries in a comminuting space (120a), and
• a drying device (140) arranged downstream of the comminuting device (120), which is designed and intended to dry the comminuted batteries,
wherein an intermediate storage device (130) is arranged between the comminuting device (120) and the drying device (140), the volume of an intermediate storage space (130a) of the intermediate storage device (130) being at least five times, preferably at least ten times, the volume of the comminuting space (120a) of the comminuting device (120), and
the intermediate storage device (130) further comprises a stirring means (134) which is designed and intended to keep the comminuted batteries received in the intermediate storage space (130a) in motion, and
wherein the comminuting space (20a) of the comminuting device (120) and the intermediate storage space (130a) of the intermediate storage device (130) and a drying space (140a) of the drying device (140) each have a supply line (124, 132, 146) for inert gas.

2. Plant according to claim 1,
**characterised in that** the comminuting space (120a) and/or the intermediate storage space (130a) and/or the drying space (140a) are gas-tight.

3. Plant according to either claim 1 or claim 2,
**characterised in that** the transfer device (180) for transferring the comminuted batteries from the comminuting device (120) to the intermediate storage device (130) and/or the transfer device (182) for transferring the comminuted batteries from the intermediate storage device (130) to the drying device (140) is gas-tight and connected to the devices adjoining same in a gas-tight manner.

4. Plant according to any of claims 1 to 3,
**characterised in that** an exhaust gas treatment device (190) is provided which is connected to the comminuting space (120a) and/or the intermediate storage space (130a) and/or the drying space (140a) via gas supply lines (184, 186, 188) and is designed and intended to process the gases formed in the comminuting space (120a) and/or in the intermediate storage space (103a) and/or in the drying space (140a).

5. Plant according to any of claims 1 to 4,
**characterised in that** a deep-freezing device (112) is arranged upstream of the comminuting device (120), which deep-freezing device comprises a feed line (114) for liquid deep-freezing medium and which is designed and intended to deep-freeze the used batteries in the liquid deep-freezing medium before they are comminuted in the comminuting device (120).

6. Plant according to claim 5,
**characterised in that** a gas head space (112a) of the deep-freezing device (112) is connected to the supply line (124, 132, 146) for inert gas.

7. Plant according to any of claims 1 to 6,
**characterised in that** a sieve unit (122), for example a perforated sieve, is arranged at the outlet of the comminuting device (120).

8. Plant according to any of claims 1 to 7,
**characterised in that** the intermediate storage device (130) is assigned a cooling device (136).

9. Plant according to any of claims 1 to 8,
**characterised in that** the drying device (140) is designed as a negative-pressure drying device (140) and has a pressure control unit (150) which is designed and intended to set and maintain the pressure in the drying space (140a) at a value of approximately 50 hPa below the ambient pressure.

10. Plant according to any of claims 1 to 9,
**characterised in that** the drying device (140) has a temperature control unit (152) which is designed and intended to set and maintain the temperature in the drying space (140a) at a value of at least 120°C.

11. Plant according to any of claims 1 to 10,
**characterised in that** a filling device (170) is arranged downstream of the comminuting device (120).

12. Plant according to any of claims 1 to 11,
**characterised in that** at least one screening device (160), preferably arranged upstream of the filling device (170), is arranged downstream of the comminuting device (120).

## Revendications

1. Installation (100) pour le recyclage de batteries usagées, comprenant
- un dispositif de broyage (120) qui est conçu et destiné à broyer les batteries usagées dans un espace de broyage (120a), et
- un dispositif de séchage (140) monté en aval du dispositif de broyage (120) qui est conçu et destiné à sécher les batteries broyées,
dans laquelle un dispositif de stockage intermédiaire (130) est agencé entre le dispositif de broyage (120) et le dispositif de séchage (140),
dans laquelle le volume d'un espace de stockage intermédiaire (130a) du dispositif de stockage intermédiaire (130) s'élève au moins à cinq fois, de préférence au moins à dix fois, le volume de l'espace de broyage (120a) du dispositif de broyage (120),
et le dispositif de stockage intermédiaire (130) comporte de plus un agitateur (134) qui est réalisé et destiné à maintenir en mouvement les batteries broyées reçues dans l'espace de stockage intermédiaire (130a), et
dans laquelle non seulement l'espace de broyage (20a) du dispositif de broyage (120) mais aussi l'espace de stockage intermédiaire (130a) du dispositif de stockage intermédiaire (130) mais aussi un espace de séchage (140a) du dispositif de séchage (140) présentent une conduite d'arrivée (124, 132, 146) pour du gaz inerte.

2. Installation selon la revendication 1,
**caractérisée en ce que** l'espace de broyage (120a) et/ou l'espace de stockage intermédiaire (130a) et/ou l'espace de séchage (140a) sont réalisés de manière étanche au gaz.

3. Installation selon la revendication 1 ou 2
**caractérisée en ce que** le dispositif de transmission (180) est réalisé de manière étanche au gaz pour la transmission des batteries broyées du dispositif de broyage (120) au dispositif de stockage intermédiaire (130) et/ou le dispositif de transmission (182) est réalisé de manière étanche au gaz pour la transmission des batteries broyées du dispositif de stockage intermédiaire (130) au dispositif de séchage (140) et sont reliés de manière étanche au gaz aux dispositifs contigus à ceux-ci.

4. Installation selon l'une quelconque des revendications 1 à 3,
**caractérisée en ce qu'**un dispositif de traitement de gaz d'échappement (190) est prévu, lequel est relié à l'espace de broyage (120a) et/ou à l'espace de stockage intermédiaire (130a) et/ou à l'espace de stockage (140a) par le biais de conduites de fourniture de gaz (184, 186, 188) et est réalisé et destiné à préparer les gaz formés dans l'espace de broyage (120a) et/ou dans l'espace de stockage intermédiaire (103a) et/ou dans l'espace de stockage (140a).

5. Installation selon l'une quelconque des revendications 1 à 4,
**caractérisée en ce qu'**un dispositif de réfrigération (112) est monté en amont du dispositif de broyage (120), lequel comporte une conduite d'arrivée (114) pour du fluide de réfrigération liquide et qui est réalisé et destiné à réfrigérer les batteries usagées dans le fluide de réfrigération liquide avant qu'elles ne soient broyées dans le dispositif de broyage (120).

6. Installation selon la revendication 5,
**caractérisée en ce qu'**un espace de tête de gaz (112a) du dispositif de réfrigération (112) est relié à la conduite d'arrivée (124, 132, 146) pour du gaz inerte.

7. Installation selon l'une quelconque des revendications 1 à 6,
**caractérisée en ce qu'**une unité de tamis (122), par exemple un tamis à trous est agencé à la sortie du dispositif de broyage (120).

8. Installation selon l'une quelconque des revendications 1 à 7,
**caractérisée en ce qu'**un dispositif de refroidissement (136) est associé au dispositif de stockage intermédiaire (130).

9. Installation selon l'une quelconque des revendications 1 à 8,
**caractérisée en ce que** le dispositif de séchage (140) est réalisé comme dispositif de séchage à dépression (140) et présente une unité de commande de pression (150) qui est conçue et destinée à régler et maintenir la pression dans l'espace de séchage (140a) à une valeur d'environ 50 hPa en dessous de la pression ambiante.

10. Installation selon l'une quelconque des revendications 1 à 9,
**caractérisée en ce que** le dispositif de séchage (140) présente une unité de commande de température (152) qui est conçue et destinée afin de régler et maintenir la température dans l'espace de séchage (140a) à une valeur d'au moins 120 °C.

11. Installation selon l'une quelconque des revendications 1 à 10,
**caractérisée en ce qu'**un dispositif de remplissage (170) est monté en aval du dispositif de broyage (120).

12. Installation selon l'une quelconque des revendications 1 à 11,
**caractérisée en ce qu'**au moins un dispositif de triage (160), monté en amont de préférence du dispositif de remplissage (170), est monté en aval du dispositif de broyage (120).
